# EUROPEAN PATENT SPECIFICATION

(11) **EP 4 303 087 B1**
(45) Date of publication and mention of the grant of the patent: **26.03.2025**
(21) Application number: 22183218.1
(22) Date of filing: 06.07.2022
(51) Int. Cl.: B60T 15/04

(54) **A HAND BRAKE VALVE WITH MEANS FOR INDICATING AN ENGAGED POSITION**
HANDBREMSVENTIL MIT MITTELN ZUM ANZEIGEN EINER EINGERÜCKTEN STELLUNG
SOUPAPE DE FREIN À MAIN COMPORTANT DES MOYENS POUR INDIQUER UNE POSITION ENGAGÉE

(43) Date of publication of application: 10.01.2024
(73) Proprietor: ZF CV Systems Europe BV, 1170 Brüssel (BE)
(72) Inventor: RIEDIGER-JANISCH, Karl-Heinz, 30455 Hannover (DE); WEINACHT, Jan, 30455 Hannover (DE); SWIATEK, Pawel, 54-616 Wroclaw (PL)
(74) Representative: Ohlendorf, Henrike

(56) References cited:
- EP-A1- 3 022 097
- EP-B1- 3 022 097
- CN-A- 105 377 648
- US-A- 3 042 061
- US-A1- 2020 114 895

## Description

### TECHNICAL FIELD OF THE INVENTION

The present invention relates to the field of hand brake valves, which, for instance, are used in commercial vehicles for applying and releasing a parking brake.

### BACKGROUND OF THE INVENTION

Conventional hand brake valves, in particular the ones that are used in applying and releasing the parking brake of the commercial vehicles are known. For instance, the European patent publication EP3022097 is one such hand brake valve.

In some conventional hand brake valves, a feedback means is provided within the device to inform the drivers/users/operators of the commercial vehicles whether an intended movement in relation to a handle of the hand brake valves has been successful or not. One of the means for providing such a feedback to the drivers is an audible "click" noise. Another means for providing such a feedback or combined with the audible click to the drivers is through a tiny tactile force feedback experienced by the drivers after completing the intended movement of the handle of the hand brake valves.

In certain operation conditions such feedback means discussed above may not be enough for the drivers of the commercial vehicles to know or realize that the hand brake valve has been engaged or not. This is particularly relevant in situations, wherein due to external factors or the environment in which the conventional hand brake valves operate and/or due to faulty working of the hand brake valves, the hand brake valves may wrongly indicate to the user or the drivers of the commercial vehicle with the requisite feedback as mentioned in the previous paragraph, but in fact, are not actually engaged i.e., the intended movement of the handle is not successful.

It is one of the objectives of the present invention to provide further improvements in relation the feedback means of the hand brake valves, whereby the drivers or operators of the commercial vehicles can successfully identify whether the intended movement of the handle of the hand brake valves to engage or disengage the parking brake has been completed.

### SUMMARY OF THE INVENTION

In accordance with an embodiment of the present invention, a hand brake valve is disclosed. The hand brake valve comprises a housing, a handle that is configured to pivot with respect to a geometric center point, wherein the handle pivots from a non-engaged position towards an engaged position and/or vice-versa, and indicating means for indicating that the hand brake valve is in the engaged position, wherein the indicating means is configured to physically draw an indicator element outside the housing so as to provide a user of the hand brake valve with a visual signal that the hand brake valve is in the engaged position. One of the technical advantages of providing the indicating means according to the present invention, is that, by drawing the indicator element out of the housing, a simple mechanism is created which combines a visual indication to the user of the hand brake valve while at the same time, optionally, providing an audible click. Such a simple mechanism can be provided as a standalone confirmation to the driver of the vehicle or the user of the hand brake valve or can be combined with an electronic switch activating a lamp in a vehicle dashboard.

The term "indicating means", in accordance with the present embodiment, may refer to a device or an apparatus or a group of components that facilitates indicating the engaged position of the hand brake valve.

In accordance with the above embodiment or in relation to a different embodiment, when the handle is at the non-engaged position, the indicator element is completely within the housing. Such a clear separation of the position of the indicator element within or outside the housing enables the user of hand brake valve to discern what the actual position of the hand brake valve is, with clarity.

Furthermore, in relation to one or more of the above-mentioned embodiments, the indicating means further includes a linear tube for receiving the indicator element such that the indicator element linearly reciprocates within the linear tube, wherein the linear tube is preferably integrally formed with respect to the housing. The linear tube, for instance, aligns the indicator element in a direction that is suitable for drawing the indicator element out of the housing without or with a least amount of resistance, which is caused e.g., due to friction between an internal surface of the linear tube and the indicator element.

In one or more of the above embodiments, wherein the hand brake valve further comprises a pivotable lever, which is connected to the indicator element at a first end of the pivotable lever is configured to pivot with respect to a pivot shaft. The technical purpose of the pivotable lever is to maintain the position of the indicator element at the disengaged position (of the hand brake valve) within the housing and nudge the same indicator element outside the housing at the engaged position of the hand brake valve, particularly when the handle pivots to the appropriate position in the direction as indicated in the accompanying figures.

In conjunction with the embodiment explained in the previous paragraph, wherein the hand brake valve further includes a counterweight which follows the movement of the handle, and wherein the pivotable lever is selectively pushed by the counterweight downwards at its second end when the handle reaches the engaged position. In this present context, the word "follows" may mean that the counterweight follows the motion or the moment of the handle. For instance, the arcuate motion of the handle is closely followed up to a point and then the counterweight drops at a slot to move the pin outside the housing. Furthermore, when the handle reaches the engaged position, the counterweight pushes the pivotable lever down at the second end such that the indicator element is drawn outside the housing. With the help of this counterweight pushing the pivotable lever, in addition to pushing the indicator element out of the housing, the user of the hand brake valve may additionally hear an audible signal such as a "click" noise to be assured of the function that the hand brake valve has indeed been moved to the engaged position. In a particular implementation, the counterweight is held under the tension exerted by a spring, and as soon as the handle of the hand brake valve reaches the engaged position, the tension of the spring may be released and the counterweight falls down to hit the second end of the pivotable lever.

Still furthermore, the pivotable lever of the one or more embodiments of the present invention includes a slot for receiving the indicator element to establish a mechanical connection between the pivotable lever and the indicator element. It may however be necessary to provide a feature such that the indicator element is not released from the pivotable lever once it is moved or drawn outside the housing of the hand brake valve. This ensures that the pulling the indicator element within the housing and drawing it outside can be done repeatedly in cycles of operation of the hand brake valve.

In relation to one or more of the above embodiments, the handle pivots with respect to the geometric center point (C) with the help of a pivoting element, wherein the pivoting element is received at an arcuate receiver.

Furthermore, the hand brake valve, in accordance with the one or more embodiments discussed above, further comprises an inclined slot for selectively receiving the counterweight and for sliding the counterweight towards the pivotable lever. Such a slot naturally conforms to the dimensional requirements of the counterweight as well as makes the counterweight move in a direction aligned to hit the pivotable lever at its second end, e.g., at an appropriate location. Thus, the inclined slot not only provides the required direction for the counterweight to move down, but also facilitates ensuring that the counterweight pushes e.g., the right part of the pivotable lever. This ensures that the indicator element is drawn out of the housing with necessary reliability.

On a different, the hand brake valve of the above embodiments may additionally include an electric switch actuated by the indicating means, wherein the electric switch activates directly or indirectly (e.g. via a vehicle electronic control unit) either a light signal or the auditory signal to confirm that the hand brake valve is (indeed) in the engaged position, and wherein, preferably, the light signal indicating that the hand brake valve is in the engaged position is provided at a vehicle dashboard.

### BRIEF DESCRIPTION OF THE ACCOMPANYING DRAWINGS

Fig. 1 illustrates a non-engaged position of a hand brake valve in accordance with an embodiment of the present invention; and
Fig. 2 illustrates an engaged position of a hand brake valve in accordance with an embodiment of the present invention.

### DETAILED DESCRIPTION OF THE ACCOMPANYING DRAWINGS

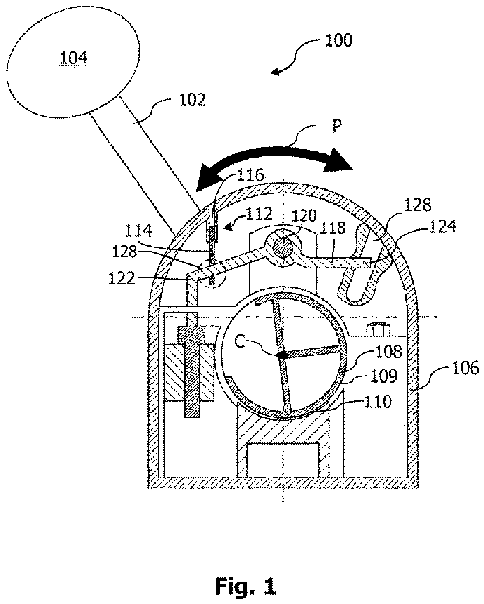

Fig. 1 illustrates a non-engaged position of a hand brake valve 100 in accordance with an embodiment of the present invention.

In the present embodiment, hand brake valve 100 comprises a housing 106, a handle 102 that is configured to pivot with respect to a geometric center point (C), wherein handle 102 pivots from a non-engaged position towards an engaged position and/or vice-versa and indicating means 112 for indicating that the hand brake valve 100 is in the engaged position. The term "indicating means", in accordance with the present embodiment, may refer to a device or an apparatus or a group of components that facilitates indicating the engaged position of hand brake valve 100. For instance, as mentioned above, handle 102 while pivoting with respect to the geometric center point C, it can move along a pivoting movement as marked e.g., with the reference sign "P" in Fig. 1. This movement is facilitated by having handle 102 connected with a pivoting element 108 which has a circular surface 109. This circular surface 109 of pivoting element 108 coordinates with an arcuate receiver 110 to facilitate the pivoting movement of handle 102. For the sake of completeness, it is noted that the physical connection between handle 102 and pivoting element 108 is not directly shown in Fig. 1, but such a physical connection does exist.

Furthermore, in accordance with the present embodiment, indicating means 112 is specifically configured to physically draw an indicator element 114 outside housing 106 so as to provide a user of hand brake valve 100 with a visual signal that hand brake valve 100 is in the engaged position. In particular, according to the illustration of the present embodiment, indicator element 114 is pushed out of housing 106 as will be shown in the explanation below. One of the technical advantages of providing indicating means 112 according to the present invention, is that, by drawing indicator element 11 out of housing 106, a simple mechanism is created which combines a visual indication to the user of hand brake valve 100 while at the same time, providing an audible click (more on this below). Such a simple mechanism can be provided as a standalone confirmation to the driver of the vehicle or the user of hand brake valve 100 or can be combined with an electronic switch (not shown) activating a lamp (not shown) in a vehicle dashboard (not shown).

In accordance with the same or different embodiment, when handle 102 is at the non-engaged position, indicator element 114 is completely within housing 106. Such a clear separation of the position of indicator element 114 within or outside housing 106 enables the user of hand brake valve 100 to discern what the actual position of hand brake valve 100 is, with clarity. As will be shown during the explanation of other features of hand brake valve 100 of the present invention, the errors or inadvertent wrong signals regarding the position of handle 102 of hand brake valve 100 is substantially reduced to the simplified mechanism.

As shown also in fig. 1, indicating means 112 further includes a linear tube 116 for receiving indicator element 114 such that indicator element 114 linearly reciprocates within linear tube 116, wherein linear tube 116 is preferably integrally formed with respect to housing 106. Linear tube 116, for instance, aligns indicator element 114 in a direction that is suitable for drawing indicator element 114 out of housing 106 without resistance.

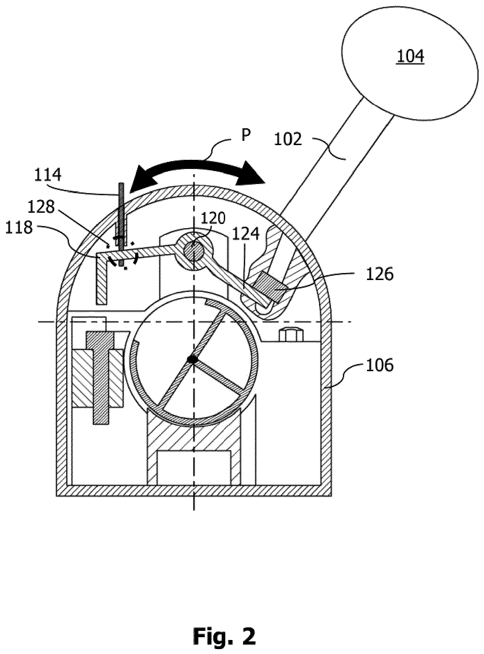

Further, in an embodiment of the present invention, hand brake valve 100 further comprises a pivotable lever 118, which is connected to indicator element 114 at a first end 122 of pivotable lever 118 is configured to pivot with respect to a pivot shaft 120. This region where pivotable lever 118 and indicator element 114 are connected to each other is marked with reference sign "128" in Fig. 1. The technical purpose of pivotable lever 118 is to maintain the position of indicator element 114 at the disengaged position (of hand brake valve 100) within housing 106 and nudge same indicator element 114 outside housing 106 at the engaged position, particularly when handle 102 pivots to the appropriate position in the direction as indicated with reference sign "P" in figs. 1 and 2.

It follows from the above, the pivotable lever 118 includes a slot (not shown in Figs. 1 and 2) for receiving indicator element 114 to establish a mechanical connection between pivotable lever 118 and indicator element 114. Further, handle 102 pivots with respect to the geometric center point (C) with the help of a pivoting element 108, wherein pivoting element 108 is received at an arcuate receiver 110.

In accordance with one or more above embodiments discussed in relation to Fig. 1, hand brake valve 100 further comprises an electric switch (not shown in figures) actuated by indicating means 112. In accordance with this implementation, the electric switch provides the possibility of indicating that hand brake valve 100 is in an engaged position with the help of e.g., a lamp.

Furthermore, the electric switch may also activate either a light signal or the auditory signal to confirm that hand brake valve 100 is in the engaged position, and wherein, preferably, the light signal indicating that hand brake valve 100 is in the engaged position is provided at a vehicle dashboard (not shown in the figures).

Fig. 2 illustrates an engaged position of hand brake valve 100 in accordance with an embodiment of the present invention.

In the same or different embodiment as discussed in the previous paragraphs, hand brake valve 100 further includes a counterweight 126 which follows the (pivoting) movement (P) of handle 102, and wherein pivotable lever 118 is selectively pushed by counterweight 126 downwards at its second end 124 when handle 102 reaches the engaged position. In this way, when the user of hand brake valve 100 moves handle 102 via knob 104 from a disengaged position, counterweight 126 may move along with handle 102 or may stay in a stationary position with or without the help of a spring to retain counterweight 126 under tension, but as soon as handle 102 reaches the engaged position, counterweight 126 drops down.

It follows from the above, wherein, when handle 102 reaches the engaged position, counterweight 126 pushes (as it drops down) pivotable lever 118 down at second end 124 such that indicator element 114 is drawn outside housing 106 (c.f. Fig. 2). With the help of this counterweight 126 pushing pivotable lever 118, in addition to pushing indicator element 114 out of housing 106, the user of hand brake valve 100 may additionally hear an audible signal such as a "click" noise to be assured of the function that hand brake valve 100 has indeed been moved to the engaged position.

Finally, as can be taken also from Fig. 2, hand brake valve 100 further comprises an inclined slot 128 for selectively receiving counterweight 126 and for sliding counterweight 126 towards pivotable lever 118. Such a slot naturally conforms to the dimensional requirements of counterweight 126 as well as makes counterweight 126 move in a direction aligned to hit pivotable lever 118 at its second end 124. Inclined slot 128 not only provides the required direction for counterweight 126 to move down, but also facilitates ensuring that counterweight 126 pushes e.g., the right part of pivotable lever 118.

### LIST OF REFERENCE SIGNS (PART OF THE DESCRIPTION)

100 - hand brake valve
102 - handle
104 - handle knob
106 - housing
108 - pivoting element
109 - circular surface of pivoting element 108
110 - arcuate receiver
112 - indicating means
114 - indicator element
C - geometric center point
P - pivoting movement
116 - linear tube
118 - pivotable lever
120 - pivot shaft
122 - first end of pivotable lever 118
124 - second end of pivotable lever 118
126 - counterweight
128 - region where pivotable lever 118 and indicator element 114 are connected to each other

## Claims

1. A hand brake valve (100), comprising
a housing (106),
a handle (102) that is configured to pivot with respect to a geometric center point (C), wherein the handle (102) pivots from a non-engaged position towards an engaged position and/or vice-versa, and
indicating means (112) for indicating that the hand brake valve (100) is in the engaged position,
**characterized in that**,
the indicating means (112) is configured to physically draw an indicator element (114) outside the housing (106) so as to provide a user of the hand brake valve (100) with a visual signal that the hand brake valve (100) is in the engaged position.

2. The hand brake valve (100) according to claim 1, wherein, when the handle (102) is at the non-engaged position, the indicator element (114) is completely within the housing (106).

3. The hand brake valve (100) according to claim 1 or claim 2, wherein the indicating means (112) further includes a linear tube (116) for receiving the indicator element (114) such that the indicator element (114) linearly reciprocates within the linear tube (116), wherein the linear tube (116) is preferably integrally formed with respect to the housing (106).

4. The hand brake valve (100) according to any one of the above claims, wherein the hand brake valve (100) further comprises a pivotable lever (118), which is connected to the indicator element (114) at a first end (122) of the pivotable lever (118) is configured to pivot with respect to a pivot shaft (120).

5. The hand brake valve (100) according to claim 4, wherein the hand brake valve (100) further includes a counterweight (126) which follows the movement of the handle (102), and wherein the pivotable lever (118) is selectively pushed by the counterweight (126) downwards at its second end (124) when the handle (102) reaches the engaged position.

6. The hand brake valve (100) according to claim 5, wherein, when the handle (102) reaches the engaged position, the counterweight (126) pushes the pivotable lever (118) down at the second end (124) such that the indicator element (114) is drawn outside the housing (106).

7. The hand brake valve (100) according to claim 4, wherein the pivotable lever (118) includes a slot for receiving the indicator element (114) to establish a mechanical connection between the pivotable lever (118) and the indicator element (114).

8. The hand brake valve (100) according to any one of the above claims, wherein the handle (102) pivots with respect to the geometric center point (C) with the help of a pivoting element (108), wherein the pivoting element (108) is received at an arcuate receiver (110).

9. The hand brake valve (100) according to claim 5, wherein the hand brake valve (100) further comprises an inclined slot (128) for selectively receiving the counterweight (126) and for sliding the counterweight (126) towards the pivotable lever (118).

10. The hand brake valve (100) according to any one of the above claims, wherein the hand brake valve (100) further comprises an electric switch actuated by the indicating means (112).

11. The hand brake valve (100) according to claim 10, wherein the electric switch activates either a light signal or the auditory signal to confirm that the hand brake valve (100) is in the engaged position, and wherein, preferably, the light signal indicating that the hand brake valve (100) is in the engaged position is provided at a vehicle dashboard.

## Patentansprüche

1. Handbremsventil (100), umfassend
ein Gehäuse (106),
einen Griff (102), der konfiguriert ist, um in Bezug auf einen geometrischen Mittelpunkt (C) zu schwenken, wobei der Griff (102) von einer Nichteingriffsposition zu einer Eingriffsposition hin und/oder umgekehrt schwenkt, und
ein Anzeigemittel (112) zum Anzeigen, dass das Handbremsventil (100) in der Eingriffsposition ist,
**dadurch gekennzeichnet, dass**
das Anzeigemittel (112) konfiguriert ist, um ein Anzeigeelement (114) aus dem Gehäuse (106) physisch nach außen zu ziehen, um einem Benutzer des Handbremsventils (100) ein visuelles Signal bereitzustellen, dass das Handbremsventil (100) in der Eingriffsposition ist.

2. Handbremsventil (100) nach Anspruch 1, wobei, wenn der Griff (102) an der Nichteingriffsposition ist, das Anzeigeelement (114) vollständig innerhalb des Gehäuses (106) ist.

3. Handbremsventil (100) nach Anspruch 1 oder 2, wobei das Anzeigemittel (112) ferner ein lineares Rohr (116) zum Aufnehmen des Anzeigeelements (114) einschließt, derart, dass sich das Anzeigeelement (114) innerhalb des linearen Rohrs (116) linear hin- und herbewegt, wobei das lineare Rohr (116) vorzugsweise in Bezug auf das Gehäuse (106) einstückig ausgebildet ist.

4. Handbremsventil (100) nach einem der vorstehenden Ansprüche, wobei das Handbremsventil (100) ferner einen schwenkbaren Hebel (118) umfasst, der mit dem Anzeigeelement (114) an einem ersten Ende (122) des schwenkbaren Hebels (118) verbunden ist und konfiguriert ist, um in Bezug auf eine Schwenkwelle (120) zu schwenken.

5. Handbremsventil (100) nach Anspruch 4, wobei das Handbremsventil (100) ferner ein Gegengewicht (126) einschließt, das der Bewegung des Griffs (102) folgt, und wobei der schwenkbare Hebel (118) durch das Gegengewicht (126) an seinem zweiten Ende (124) selektiv nach unten gedrückt wird, wenn der Griff (102) die Eingriffsposition erreicht.

6. Handbremsventil (100) nach Anspruch 5, wobei, wenn der Griff (102) die Eingriffsposition erreicht, das Gegengewicht (126) den schwenkbaren Hebel (118) an dem zweiten Ende (124) nach unten drückt, derart, dass das Anzeigeelement (114) aus dem Gehäuse (106) nach außen gezogen wird.

7. Handbremsventil (100) nach Anspruch 4, wobei der schwenkbare Hebel (118) einen Schlitz zum Aufnehmen des Anzeigeelements (114) einschließt, um eine mechanische Verbindung zwischen dem schwenkbaren Hebel (118) und dem Anzeigeelement (114) herzustellen.

8. Handbremsventil (100) nach einem der vorstehenden Ansprüche, wobei der Griff (102) in Bezug auf den geometrischen Mittelpunkt (C) mit Hilfe eines Schwenkelements (108) schwenkt, wobei das Schwenkelement (108) an einer bogenförmigen Aufnahme (110) aufgenommen ist.

9. Handbremsventil (100) nach Anspruch 5, wobei das Handbremsventil (100) ferner einen geneigten Schlitz (128) zum selektiven Aufnehmen des Gegengewichts (126) und zum Gleiten des Gegengewichts (126) zu dem schwenkbaren Hebel (118) hin umfasst.

10. Handbremsventil (100) nach einem der vorstehenden Ansprüche, wobei das Handbremsventil (100) ferner einen elektrischen Schalter, der durch das Anzeigemittel (112) betätigt wird, umfasst.

11. Handbremsventil (100) nach Anspruch 10, wobei der elektrische Schalter entweder ein Lichtsignal oder ein akustisches Signal aktiviert, um zu bestätigen, dass das Handbremsventil (100) in der Eingriffsposition ist, und wobei vorzugsweise das Lichtsignal, das anzeigt, dass das Handbremsventil (100) in der Eingriffsposition ist, an einem Armaturenbrett des Fahrzeugs bereitgestellt ist.

## Revendications

1. Valve de frein à main (100), comprenant
un boîtier (106),
une poignée (102) qui est configurée pour pivoter par rapport à un point central géométrique (C), dans laquelle la poignée (102) pivote d'une position non engagée vers une position engagée et/ou vice versa, et
un moyen indicateur (112) pour indiquer que la valve de frein à main (100) est dans la position engagée,
**caractérisée en ce que,**
le moyen indicateur (112) est configuré pour tirer physiquement un élément indicateur (114) à l'extérieur du boîtier (106) de manière à fournir à un utilisateur de la valve de frein à main (100) un signal visuel indiquant que la valve de frein à main (100) est dans la position engagée.

2. Valve de frein à main (100) selon la revendication 1, dans laquelle, lorsque la poignée (102) est dans la position non engagée, l'élément indicateur (114) est complètement à l'intérieur du boîtier (106).

3. Valve de frein à main (100) selon la revendication 1 ou la revendication 2, dans laquelle le moyen indicateur (112) comprend en outre un tube linéaire (116) pour recevoir l'élément indicateur (114) de telle sorte que l'élément indicateur (114) effectue un mouvement de va-et-vient linéaire à l'intérieur du tube linéaire (116), dans lequel le tube linéaire (116) est de préférence formé d'un seul tenant par rapport au boîtier (106).

4. Valve de frein à main (100) selon l'une quelconque des revendications précédentes, dans laquelle la valve de frein à main (100) comprend en outre un levier pivotant (118), qui est relié à l'élément indicateur (114) au niveau d'une première extrémité (122) du levier pivotant (118), configuré pour pivoter par rapport à un arbre de pivot (120).

5. Valve de frein à main (100) selon la revendication 4, dans laquelle la valve de frein à main (100) comporte en outre un contrepoids (126) qui suit le mouvement de la poignée (102), et dans laquelle le levier pivotant (118) est sélectivement poussé par le contrepoids (126) vers le bas au niveau de sa seconde extrémité (124) lorsque la poignée (102) atteint la position engagée.

6. Valve de frein à main (100) selon la revendication 5, dans laquelle, lorsque la poignée (102) atteint la position engagée, le contrepoids (126) pousse le levier pivotant (118) vers le bas au niveau de la seconde extrémité (124) de sorte que l'élément indicateur (114) est tiré à l'extérieur du boîtier (106).

7. Valve de frein à main (100) selon la revendication 4, dans laquelle le levier pivotant (118) comporte une fente pour recevoir l'élément indicateur (114) afin d'établir une liaison mécanique entre le levier pivotant (118) et l'élément indicateur (114).

8. Valve de frein à main (100) selon l'une quelconque des revendications précédentes, dans laquelle la poignée (102) pivote par rapport au point central géométrique (C) à l'aide d'un élément pivotant (108), dans laquelle l'élément pivotant (108) est reçu au niveau d'un récepteur arqué (110).

9. Valve de frein à main (100) selon la revendication 5, dans laquelle la valve de frein à main (100) comprend en outre une fente inclinée (128) pour recevoir sélectivement le contrepoids (126) et pour faire glisser le contrepoids (126) vers le levier pivotant (118).

10. Valve de frein à main (100) selon l'une quelconque des revendications précédentes, dans laquelle la valve de frein à main (100) comprend en outre un interrupteur électrique actionné par le moyen indicateur (112).

11. Valve de frein à main (100) selon la revendication 10, dans laquelle l'interrupteur électrique active soit un signal lumineux soit un signal auditif pour confirmer que la valve de frein à main (100) est dans la position engagée, et dans laquelle, de préférence, le signal lumineux indiquant que la valve de frein à main (100) est dans la position engagée est fourni au niveau d'un tableau de bord de véhicule.
